(19) Europäisches Patentamt
European Patent Office
Office européen des brevets

(11) EP 2 204 413 B1

(12) **EUROPEAN PATENT SPECIFICATION**

(45) Date of publication and mention of the grant of the patent:
**30.11.2011 Bulletin 2011/48**

(21) Application number: **08845981.3**

(22) Date of filing: **28.10.2008**

(51) Int Cl.:
***C08L 33/14*** *(2006.01)* ***B32B 27/36*** *(2006.01)*
***B32B 27/42*** *(2006.01)* ***C08J 7/04*** *(2006.01)*
***C08K 5/3492*** *(2006.01)* ***C09D 7/12*** *(2006.01)*
***C09D 131/06*** *(2006.01)* ***C09D 161/28*** *(2006.01)*
***C08L 61/28*** *(2006.01)*

(86) International application number:
**PCT/JP2008/069994**

(87) International publication number:
**WO 2009/057799 (07.05.2009 Gazette 2009/19)**

(54) **POLYCARBONATE RESIN LAMINATE**

POLYCARBONATHARZLAMINAT

STRATIFIÉ DE RÉSINE DE POLYCARBONATE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.10.2007 JP 2007280232**

(43) Date of publication of application:
**07.07.2010 Bulletin 2010/27**

(73) Proprietor: **Teijin Chemicals, Ltd.**
**Chiyoda-ku**
**Tokyo 100-0013 (JP)**

(72) Inventor: **AWANO, Toshiyuki**
**Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**EP-A1- 0 604 922** **JP-A- 2 131 940**
**JP-A- 4 139 227** **JP-A- 5 057 857**
**JP-A- 11 124 501** **JP-A- 11 158 342**
**JP-A- 2002 167 490** **JP-A- 2002 317 123**
**JP-A- 2003 147 276** **JP-A- 2006 045 452**
**US-A- 5 726 254**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 204 413 B1

**Description**

TECHNICAL FIELD

The present invention relates to a polycarbonate resin laminate. More specifically, it relates to a laminate which has a film formed by curing a thermosetting resin composition comprising methylated methylolmelamine, a specific acrylic copolymer, a crosslinking agent, a triazine-based ultraviolet absorbent and nitric acid on a polycarbonate resin sheet and is excellent in weather resistance, wet heat resistance, wear resistance and formability.

BACKGROUND OF THE ART

Although polycarbonate resin has excellent transparency, heat resistance, wet heat resistance, workability and mechanical strength and is widely used in electric parts, construction parts and auto parts, its surface is soft and easily scratched. As a solution to the scratching of the surface, a method in which a transparent cured film is formed on the surface of a polycarbonate resin sheet is generally employed. When a thermosetting resin is used to form the cured film, the polycarbonate resin sheet having this transparent cured film is used in display protection plates for liquid crystal TVs, projection TVs, portable telephones and car navigation systems, in helmet shields and in wind-proof application for two-wheel vehicles such as motorcycles and scooters.

As one of the applications of the polycarbonate resin sheet having a transparent cured film on the surface, making use of the above feature, it is known that the sheet is subjected to post-forming such as heat bending to be used as a final product. However, as the wear resistance and heat formability of the cured film are conflicting with each other, a cured film having high wear resistance is hard and fragile with an extremely low extensibility, whereby the cured film cannot follow a change in the shape of the polycarbonate resin sheet at the time of heat forming, thereby producing a crack. To solve this problem, there is a method in which a pre-heat formed sheet or an injection molded article is coated. However, to remove foreign matter adhered to the surface of a molded article, the molded article must be cleaned before coating, thereby taking a lot of trouble.

Patent Document 1 proposes to solve the above problem by using an optically cured product of a specific (meth)acrylate monomer as the cured film. Patent Document 2 proposes to solve the above problem by using an ultraviolet cured product of a specific bifunctional urethane acrylate oligomer. However, as an optically (ultraviolet radiation) curable resin is used to form the cured film in these documents, the wear resistance of the obtained molded article is lower than when a thermosetting resin is used.

To solve this problem, Patent Document 3 proposes to provide a transparent polycarbonate resin laminate having high wear resistance and excellent formability by using an acrylic copolymer having a specific structure.

Meanwhile, the polycarbonate resin is inferior in weather resistance, and its deterioration such as yellowing readily occurs when it is used outdoors. When it is used for wind-proof application in two-wheel vehicles such as motorcycles and scooters, weather resistance and wet heat resistance are required to secure its outdoor use. For instance, very strict standards are set in Federal Motor vehicle Safety Standard No. 205, as exemplified by the revision of weather resistance standards. To solve this problem, it is known that weather resistance is provided by mixing an ultraviolet absorbent into a cured film. However, when a benzophenone-based ultraviolet absorbent is mixed into the polycarbonate resin laminate proposed by Patent Document 3 to provide weather resistance, formability becomes unsatisfactory. When maleic acid is used as a curing catalyst, wet heat resistance becomes unsatisfactory.

(Patent Document 1) JP-A 10-036540
(Patent Document 2) JP-A 11-343460
(Patent Document 3) JP-A 2007-112862

DISCLOSURE OF THE INVENTION

It is an object of the present invention to provide a thermosetting resin composition which provides a cured film having excellent transparency, wear resistance, weather resistance, wet heat resistance and formability. It is another object of the present invention to provide a thermosetting resin composition which provides a cured film having excellent adhesion to a polycarbonate resin sheet.

It is still another object of the present invention to provide a laminate which has transparency, wear resistance, weather resistance and wet heat resistance as well as excellent formability. It is a further object of the present invention to provide a process of manufacturing a laminate having excellent transparency, wear resistance, weather resistance, wet heat resistance and formability.

The inventors of the present invention have conducted intensive studies to solve the above problem of a polycarbonate resin sheet having a cured film. As a result, they have found that a film formed by thermally curing a

thermosetting resin composition comprising methylated methylolmelamine (A), a specific acrylic copolymer (B) and a triazine-based ultraviolet absorbent (C) has excellent formability, especially extensibility. They have also found that when nitric acid (D) is used as a curing agent in the thermosetting resin composition, a cured film having excellent wet heat resistance is obtained. The present invention has been accomplished based on these findings.

That is, according to the present invention, the following are provided.

1. A thermosetting resin composition comprising:

100 parts by weight of methylated methylolmelamine (A) ;
1 to 100 parts by weight of an acrylic copolymer (B) which contains:

(i) 50 to 99 mol% of a recurring unit represented by the following formula (1) (unit B-1):

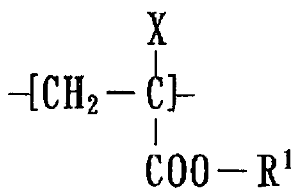

(1)

(X is a hydrogen atom or methyl group, and $R^1$ is an alkyl group having 1 to 5 carbon atoms),
(ii) 0 to 35 mol% of a recurring unit represented by the following formula (2) (unit B-2):

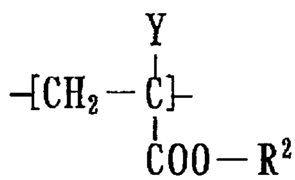

(2)

(Y is a hydrogen atom or methyl group, and $R^2$ is a cycloalkyl group having 6 to 20 carbon atoms), and
(iii) 1 to 35 mol% of a recurring unit represented by the following formula (3) (unit B-3):

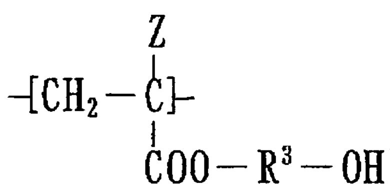

(3)

(Z is a hydrogen atom or methyl group, and $R^3$ is an alkylene group having 2 to 5 carbon atoms),

the total content of the units (B-1) to (B-3) being at least 70 mol% based on 100 mol% of the total of all the recurring units;
4 to 28 parts by weight of a triazine-based ultraviolet absorbent (C);
2 to 9 parts by weight of nitric acid (D);
10 to 200 parts by weight of a crosslinking agent (E); and
200 to 42,000 parts by weight of a solvent (F).

2. The resin composition according to the above paragraph 1, wherein the acrylic copolymer (B) contains 50 to 99 mol% of ethyl methacrylate (unit B-1), 0 to 35 mol% of cyclohexyl methacrylate (unit B-2) and 1 to 35 mol% of 2-hydroxyethyl methacrylate (unit B-3).

3. The resin composition according to the above paragraph 1, wherein the triazine-based ultraviolet absorbent (C) is represented by the following formula (4):

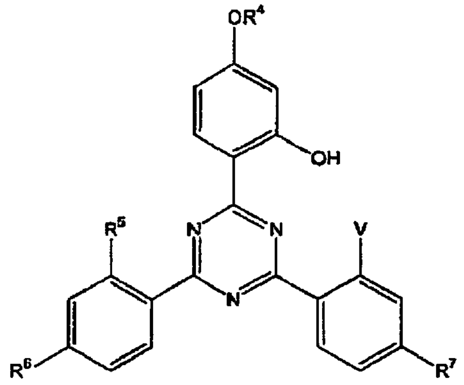

(4)

wherein $R^4$ is an alkyl group having 1 to 18 carbon atoms, substituent represented by $-CH_2CH(OH)CH_2O-R^8$ or substituent represented by $-CH(CH_3)C(O)O-R^9$ ($R^8$ is an alkyl group having 1 to 18 carbon atoms, and $R^9$ is an alkyl group having 1 to 18 carbon atoms), $R^5$ is a hydrogen atom, alkyl group having 1 to 18 carbon atoms or alkoxy group having 1 to 18 carbon atoms, $R^6$ and $R^7$ are each independently a hydrogen atom, alkyl group having 1 to 18 carbon atoms, alkoxy group having 1 to 18 carbon atoms or phenyl group which may be substituted by an alkyl group having 1 to 18 carbon atoms or halogen atom, and V is a hydrogen atom, OH group or alkyl group having 1 to 12 carbon atoms.

4. The resin composition according to the above paragraph 1, wherein the crosslinking agent (E) is at least one selected from the group consisting of ethylene glycol, diethylene glycol, butanediol, hexanediol, octanediol, decanediol, triethylene glycol, polyethylene glycol and cyclohexane dimethanol.

5. The resin composition according to the above paragraph 1, wherein the solvent (F) is at least one selected from the group consisting of an alkyl alcohol having 1 to 5 carbon atoms, cellosolve and aromatic hydrocarbon.

6. A laminate comprising a polycarbonate resin sheet and a cured film formed on at least one side of the sheet, wherein the cured film is obtained by thermally curing the thermosetting resin composition of the above paragraph 1.

7. The laminate according to the above paragraph 6 which has a $\Delta$ yellowness index ($\Delta$YI) of not more than 5 and a $\Delta$ total light transmittance value ($\Delta$Tt) of not more than 3 % before and after an exposure test which is carried out by using a xenon ark light source at an irradiance of 60 W/$m^2$, a black panel temperature of $70\pm3$°C, a relative humidity of $50\pm5$ % and an accumulated exposure dose of 306 MJ/$m^2$ when water is sprayed for 18 minutes during 120 minutes of a water spray cycle.

8. The laminate according to the above paragraph 6,
wherein when eleven cuts are made in the cured film at intervals of 1 mm in longitudinal and transverse directions with a cutter to obtain 100 squares and Sellotape (registered trademark) (adhesive tape of Nichiban Co., Ltd.) is put on these squares and stripped off in a 90° direction at once after the laminate is left in a thermo-hygrostat at a temperature of 60°C and a relative humidity of 95 % for 168 hours, the number of squares which remain without the peel-off of the cured film is 100.

9. The laminate according to the above paragraph 6, wherein the extensibility of the cured film is not less than 4.4 %.

10. The laminate according to the above paragraph 6, wherein the thickness of the cured film is 1 to 10 $\mu$m.

11. The laminate according to the above paragraph 6, wherein the difference ($\Delta$ haze value) between the haze value after 100 revolutions and the initial haze value measured by using a Taber abrader and the CS-10F truck wheel at a load of 500 g/wheel and a revolving speed of 70 rpm is not more than 10 %.

12. The laminate according to the above paragraph 6, wherein the thickness of the polycarbonate resin sheet is 0.4 to 8.0 mm.

13. A process of manufacturing a laminate, comprising the steps of:

(i) forming a coating film by applying the thermosetting resin composition of the above paragraph 1 to a polycarbonate resin sheet; and
(ii) forming a cured film by thermally curing the coating film.

The present invention will be described in detail hereinunder.

BEST MODE FOR CARRYING OUT THE INVENTION

<polycarbonate resin sheet>

In the present invention, a polycarbonate resin sheet is used. The thickness of the polycarbonate resin sheet is not particularly limited but preferably 0.4 to 8.0 mm, more preferably 0.5 to 5.0 mm. The polycarbonate resin sheet is preferably transparent. That is, the haze value of the polycarbonate resin sheet is preferably not more than 10 %, more preferably not more than 5 %, particularly preferably not more than 1 %. Although the polycarbonate resin sheet used in the present invention is manufactured from the following polycarbonate resin by any method, it can be easily manufactured by a melt-extrusion method.

The polycarbonate resin used in the present invention is, for example, an aromatic polycarbonate resin obtained by reacting a diphenol with a carbonate precursor. Typical examples of the diphenol used herein include 2,2-bis(4-hydroxyphenyl)propane (commonly known as "bisphenol A"), 2,2-bis(3-methyl-4-hydroxyphenyl)propane, 2,2-bis(3,5-dimethyl-4-hydroxyphenyl)propane, 1,1-bis(4-hydroxyphenyl)ethane, 1,1-bis(4-hydroxyphenyl) cyclohexane, 2,2-bis(4-hydroxyphenyl)butane, 2,2-bis(4-hydroxyphenyl)-3-methylbutane, 9,9-bis{(4-hydroxy-3-methyl)phenyl}fluorene 2,2-bis (4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, $\alpha,\alpha'$-bis(4-hydroxyphenyl)-m-diisopropylbenzene, bis(4-hydroxyphenyl)sulfide and bis (4-hydroxyphenyl) sulfone. Out of these, bisphenol A is preferred. These diphenols may be used alone or in combination of two or more.

Examples of the carbonate precursor include phosgene, diphenyl carbonate and bischloroformates of the above diphenols. Out of these, phosgene and diphenyl carbonate are particularly preferred.

For the manufacture of the polycarbonate resin, any method may be employed. For example, a solution method using phosgene as the carbonate precursor or a melting method using diphenyl carbonate as the carbonate precursor is preferably employed.

In the solution method using phosgene, that is, phosgene method, a reaction is carried out in the presence of an acid binder and an organic solvent. Examples of the acid binder include alkali metal hydroxides such as sodium hydroxide and potassium hydroxide, and amine compounds such as pyridine. Examples of the solvent include halogenated hydrocarbons such as methylene chloride and chlorobenzene. A catalyst such as a tertiary amine or a quaternary ammonium salt may be used to promote the reaction. The reaction temperature is generally 0 to 40˚C, and the reaction time is several minutes to 5 hours.

In the melting method using diphenyl carbonate, that is, transesterification method, a predetermined amount of a diphenol component and diphenyl carbonate are stirred under heating in an inert gas atmosphere, and the formed alcohol or phenol is distilled off. The reaction temperature which differs according to the boiling point of the formed alcohol or phenol is generally 120 to 350˚C. The reaction is completed while the formed alcohol or phenol is distilled off by reducing the pressure from the initial stage of the reaction. An ordinary transesterification reaction catalyst may be used to promote the reaction.

The molecular weight of the polycarbonate resin is preferably 10,000 to 50, 000, more preferably 15,000 to 35,000 in terms of viscosity average molecular weight (M). A polycarbonate resin having this viscosity average molecular weight has sufficiently high strength and high melt flowability at the time of molding. The viscosity average molecular weight M in the present invention is obtained by inserting the specific viscosity ($\eta_{sp}$) of a solution prepared by dissolving 0.7 g of the polycarbonate resin in 100 ml of methylene chloride at 20˚C into the following equation.

$\eta_{sp}/c = [\eta] + 0.45 \times [\eta]^2 c$ ($[\eta]$ represents an intrinsic viscosity)

$[\eta] = 1.23 \times 10^{-4} M^{0.83}$

$c = 0.7$

A stabilizer such as a phosphite, phosphate or phosphonate, a flame retardant such as tetrabromobisphenol A, a low molecular weight polycarbonate of tetrabromobisphenol A or decabromodiphenol, a colorant and a lubricant may be optionally added to the polycarbonate resin.

<thermosetting resin composition>

The thermosetting resin composition of the present invention comprises 100 parts by weight of methylated methylolmelamine (A), 1 to 100 parts by weight of an acrylic copolymer (B), 4 to 28 parts by weight of a triazine-based ultraviolet absorbent (C), 2 to 9 parts by weight of nitric acid (D), 10 to 200 parts by weight of a crosslinking agent (E) and 200 to 42,000 parts by weight of a solvent (F).

(methylated methylolmelamine (A))

The methylated methylolmelamine (A) is desirably self-crosslinked and a (1.4 to 2.0) -mer. When it is a (less than 1.4) -mer, reactivity is high, whereby storage stability in a solution state degrades, and when it is a (more than 2.0)-mer, the extensibility of the obtained cured film is low, thereby reducing formability.

<acrylic copolymer (B))

The thermosetting resin composition comprises an acrylic copolymer (B). The acrylic copolymer (B) contains:

(i) 50 to 99 mol% of a recurring unit represented by the following formula (1) (unit B-1):

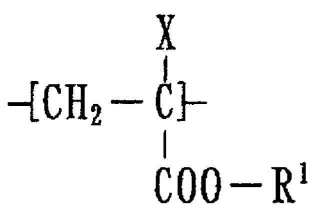

(1)

(X is a hydrogen atom or methyl group, and $R^1$ is an alkyl group having 1 to 5 carbon atoms),
(ii) 0 to 35 mol% of a recurring unit represented by the following formula (2) (unit B-2):

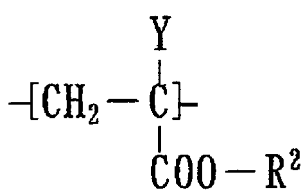

(2)

(Y is a hydrogen atom or methyl group, and $R^2$ is a cycloalkyl group having 6 to 20 carbon atoms), and
(iii) 1 to 35 mol% of a recurring unit represented by the following formula (3) (unit B-3):

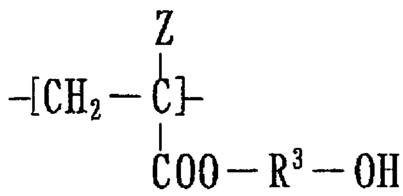

(3)

(Z is a hydrogen atom or methyl group, and $R^3$ is an alkylene group having 2 to 5 carbon atoms),

the total content of the units (B-1) to (B-3) being at least 70 mol%, preferably at least 80 mol%, more preferably at least 90 mol% based on 100 mol% of the total of all the recurring units.

Alkyl (meth)acrylates corresponding to the unit B-1 include methyl methacrylate, ethyl methacrylate, butyl methacrylate, methyl acrylate, ethyl acrylate and butyl acrylate. They may be used alone or in combination of two or more. Out of these, ethyl methacrylate is preferably used.

Acrylate or methacrylate monomers having a cycloalkyl group having 6 to 20 carbon atoms corresponding to the unit B-2 are not particularly limited if they are acrylates or methacrylates having at least one cycloalkyl group having 6 to 20 carbon atoms in the molecule.

Illustrative examples of the monomers include cyclohexyl acrylate, 4-methylcyclohexyl acrylate, 2,4-dimethylcyclohexyl acrylate, 2,4,6-trimethylcyclohexyl acrylate, 4-t-butylcyclohexyl acrylate, cyclohexylmethyl acrylate, 4-methylcyclohexylmethyl acrylate, 2,4-dimethylcyclohexylmethyl acrylate, 2,4,6-trimethylcyclohexylmethyl acrylate, 4-t-butylcyclohexylmethyl acrylate, cyclohexyl methacrylate, 4-methylcyclohexyl methacrylate, 2,4-dimethylcyclohexyl methacrylate, 2,4,6-trimethylcyclohexyl methacrylate, 4-t-butylcyclohexyl methacrylate, cyclohexylmethyl methacrylate, 4-methylcyclohexylmethyl methacrylate, 2,4-dimethylcyclohexylmethyl methacrylate, 2,4,6-trimethylcyclohexylmethyl methacrylate and 4-t-butylcyclohexylmethyl methacrylate. They may be used alone or in combination of two or more. Out of these, cyclohexyl methacrylates are preferably used.

Acrylate or methacrylate monomers having a hydroxyl group corresponding to the unit B-3 include 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate, 4-hydroxybutyl methacrylate, 3-hydroxybutyl acrylate, 3-hydroxybutyl methacrylate, 2-hydroxybutyl acrylate and 2-hydroxybutyl methacrylate. They may be used alone or in combination of two or more. Out of these, 2-hydroxyethyl methacrylate is preferably used.

Therefore, the acrylic copolymer (B) preferably contains 50 to 99 mol% of ethyl methacrylate (unit B-1), 0 to 35 mol% of cyclohexyl methacrylate (unit B-2), and 1 to 35 mol% of 2-hydroxyethyl methacrylate (unit B-3).

The content of the unit B-1 is 50 to 99 mol%, preferably 60 to 99 mol%, more preferably 70 to 99 mol% based on 100 mol% of the total of all the recurring units of the acrylic copolymer (B). The content of the unit B-2 is 0 to 35 mol%, preferably 1 to 35 mol%, more preferably 5 to 30 mol%. The content of the unit B-3 is 1 to 35 mol%, preferably 3 to 25 mol%, more preferably 5 to 15 mol%.

When the content of the unit B-1 is lower than 50 mol%, a poor appearance such as whitening occurs disadvantageously. When the content of the unit B-2 is higher than 35 mol%, adhesion between the cured film and the substrate and wear resistance degrade disadvantageously. When the content of the unit B-3 is higher than 35 mol%, the wear resistance of the cured film deteriorates disadvantageously, and when the content of the unit B-3 is lower than 1 mol%, the reaction between the acrylic copolymer and the thermosetting resin as the main component does not proceed fully due to a shortage of the hydroxyl group, thereby making it impossible to obtain the durability of the coating film.

Further, the acrylic copolymer in the present invention may contain other recurring units to provide functions. The total content of the other recurring units is preferably not more than 30 mol%, more preferably not more than 20 mol%, particularly preferably not more than 10 mol% based on 100 mol% of the total of all the recurring units of the acrylic copolymer. The other recurring units can be introduced by copolymerizing a vinyl-based monomer copolymerizable with an acrylate or methacrylate monomer. For example, acrylic acid, methacrylic acid, acrylic acid amide, methacrylic acid amide, 2-ethylhexyl acrylate, 2-ethylhexyl methacrylate, dodecyl acrylate or dodecyl methacrylate may be copolymerized to improve adhesion or durability. A single acrylic copolymer does not need to be used alone, and a mixture of two or more acrylic copolymers may be used.

The molecular weight of the acrylic copolymer (B) is preferably not less than 20,000, more preferably not less than 50,000 and preferably not more than 10,000,000 in terms of weight average molecular weight.

The content of the acrylic copolymer (B) in the thermosetting resin composition is 1 to 100 parts by weight, preferably 3 to 90 parts by weight, more preferably 5 to 70 parts by weight based on 100 parts by weight of the methylated methylolmelamine (A). Within this range, a laminate having the sufficiently high wear resistance of melamine resin and

further excellent formability can be obtained.

(triazine-based ultraviolet absorbent (C))

A triazine-based ultraviolet absorbent (C) is used as the ultraviolet absorbent. The content of the triazine-based ultraviolet absorbent (C) in the thermosetting resin composition is not less than 4 parts by weight, preferably not less than 6 parts by weight, more preferably not less than 8 parts by weight, much more preferably not less than 10 parts by weight and not more than 28 parts by weight, preferably not more than 24 parts by weight, more preferably not more than 20 parts by weight, much more preferably not more than 18 parts by weight based on 100 parts by weight of the methylated methylolmelamine (A). When the content of the triazine-based ultraviolet absorbent is too low, weather resistance cannot be provided and when the content is too high, deterioration such as whitening occurs on the surface of the coating film after a weather resistance test. The formability, especially extensibility of the cured film is improved by using the triazine-based ultraviolet absorbent.

The triazine-based ultraviolet absorbent (C) is preferably a triazine-based ultraviolet absorbent represented by the following formula (4):

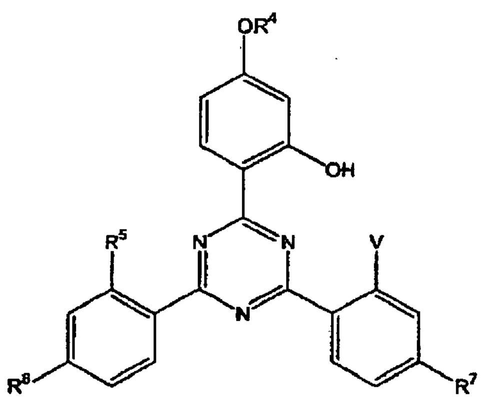

(4)

In the above formula, $R^4$ is an alkyl group having 1 to 18, preferably 3 to 16, more preferably 4 to 8 carbon atoms, substituent represented by $-CH_2CH(OH)CH_2O-R^8$ or substituent represented by $-CH(CH_3)C(O)O-R^9$. $R^8$ is an alkyl, group having 1 to 18, preferably 3 to 16, more preferably 6 to 14 carbon atoms. $R^9$ is an alkyl group having 1 to 18, preferably 3 to 16, more preferably 6 to 10 carbon atoms. Examples of the alkyl group represented by $R^4$, $R^8$ and $R^9$ include ethyl group, propyl group, butyl group, pentyl group and hexyl group.

$R^5$ is a hydrogen atom, alkyl group having 1 to 18 carbon atoms or alkoxy group having 1 to 18 carbon atoms. The number of carbon atoms of the alkyl group is preferably 1 to 8, more preferably 1 to 4. Examples of the alkyl group include methyl group, ethyl group, propyl group, butyl group, pentyl group and hexyl group. The number of carbon atoms of the alkoxy group is preferably 1 to 8, more preferably 1 to 4. Examples of the alkoxy group include methoxy group, ethoxy group, propoxy group and butoxy group.

$R^6$ and $R^7$ are each independently a hydrogen atom, alkyl group having 1 to 18 carbon atoms, alkoxy group having 1 to 18 carbon atoms or phenyl group which may be substituted by an alkyl group having 1 to 18 carbon atoms or halogen atom. The number of carbon atoms of the alkyl group is preferably 1 to 8, more preferably 1 to 4. Examples of the alkyl group include methyl group, ethyl group, propyl group, butyl group, pentyl group and hexyl group. The number of carbon atoms of the alkoxy group is preferably 1 to 8, more preferably 1 to 4. Examples of the alkoxy group include ethoxy group, propoxy group and butoxy group. The number of carbon atoms of the alkyl group substituting the phenyl group is preferably 3 to 16, more preferably 4 to 8. Examples of the alkyl group include ethyl group, propyl group, butyl group, pentyl group and hexyl group. Examples of the halogen atom include fluorine atom, chlorine atom and bromine atom.

V is a hydrogen atom, OH group or alkyl group having 1 to 12 carbon atoms. The number of carbon atoms of the alkyl group is preferably 1 to 8, more preferably 1 to 4. Examples of the alkyl group include ethyl group, propyl group, butyl group, pentyl group and hexyl group.

Examples of the triazine-based ultraviolet absorbent represented by the above formula (4) include

(1) TINUVIN 1577 ($R^4$ is a hexyl group, and $R^5$, $R^6$, $R^7$ and V are hydrogen atoms),
(2) TINUVIN 400 ($R^4$ is $-CH_2CH(OH)\ CH_2O-R^8$ ($R^8$ is a dodecyl group or tridecyl group), and $R^5$, $R^6$, $R^7$ and V are hydrogen atoms),

(3) TINUVIN 405 ($R^4$ is $-CH_2CH(OH)CH_2O-R^8$ ($R^8$ is an octyl group), and $R^5$, $R^6$, $R^7$ and V are methyl groups),
(4) TINUVIN 460 ($R^4$ is a butyl group, $R^5$, $R^6$ and $R^7$ are butyloxy groups, and V is an OH group), and
(5) TINUVIN 479 ($R^4$ is $-CH(CH_3)C(O)O-R^9$ ($R^9$ is an octyl group), $R^5$ is a hydrogen atom, $R^6$ and $R^7$ are phenyl groups, and V is a hydrogen atom) of Ciba Specialty Chemicals Co., Ltd. They may be used alone or in combination of two or more.

(nitric acid (D))

Nitric acid (D) is used as a curing agent. The content of the nitric acid (D) as an aqueous solution containing 60 wt% of nitric acid is 2 to 9 parts by weight, preferably 3 to 8 parts by weight, more preferably 4 to 7 parts by weight based on 100 parts by weight of the methylated methylolmelamine (A). Therefore, the content of $HNO_3$ is 1.2 to 5.4 parts by weight, preferably 1.8 to 4.8 parts by weight, more preferably 2.4 to 4.2 parts by weight based on 100 parts by weight of the methylated methylolmelamine (A). When the content of nitric acid (D) is too low, curing does not take place completely and wear resistance degrades, and when the content is too high, the corrosion of production equipment made of metal occurs disadvantageously.

When maleic acid is used as a curing agent, maleic acid has low volatility and remains in the cured film, whereby it is most likely to deteriorate the cured film. Nitric acid has higher volatility than maleic acid, rarely remains in the cured film and can retain the durability of the cured film.

(crosslinking agent (E))

Examples of the crosslinking agent (E) include ethylene glycol, diethylene glycol, butanediol, hexanediol, octanediol, decanediol, triethylene glycol, polyethylene glycol and cyclohexane dimethanol. They may be used alone or in combination of two or more. The content of the crosslinking agent (E) should be such that the functional group of the methylated methylolmelamine and the functional group of the crosslinking agent become equimolar to each other and is preferably 10 to 200 parts by weight, more preferably 20 to 150 parts by weight based on 100 parts by weight of the methylated methylolmelamine (A).

(solvent (F))

Examples of the solvent (F) include alkyl alcohols having 1 to 5 carbon atoms such as methanol, ethanol, isopropyl alcohol and isobutyl alcohol, cellosolves such as ethylene glycol monomethyl ether and diethylene glycol monobutyl ether, and aromatic hydrocarbons such as toluene and xylene. They may be used alone or in combination of two or more. The content of the solvent (F) in the thermosetting resin composition is preferably 200 to 42,000 parts by weight, more preferably 400 to 12,000 parts by weight based on 100 parts by weight of the methylated methylolmelamine (A). That is, the total content of solid components is preferably 1 to 50 wt%, more preferably 3 to 30 wt%.

(other components)

The thermosetting resin composition may be mixed with various additives as required. The additives include a leveling agent, an antifoaming agent and an antistatic agent.

The thermosetting resin composition can be prepared by mixing together the methylated methylolmelamine (A), the acrylic copolymer (B), the triazine-based ultraviolet absorbent (C), the nitric acid (D), the crosslinking agent (E) and the solvent (F).

<process of manufacturing a laminate>

The laminate of the present invention can be manufactured through (i) the step of forming a coating film by applying the above thermosetting resin composition to a polycarbonate resin sheet and (ii) the step of forming a cured film by thermally curing the coating film.

Since the nitric acid (D) has high reactivity, it is preferably added right before the thermosetting resin composition is applied to the polycarbonate resin sheet. Therefore, the laminate of the present invention can be manufactured through
(0-1) the step of obtaining a precursor of a thermosetting resin composition by mixing together the methylated methylolmelamine (A), the acrylic copolymer (B), the triazine-based ultraviolet absorbent (C), the crosslinking agent (E) and the solvent (F),
(0-2) the step of adding the nitric acid (D) to the precursor,

(i) the step of forming a coating film by applying the thermosetting resin composition to the polycarbonate resin

sheet and

(ii) the step of forming a cured film by thermally curing the coating film.

(step of forming a coating film)

As means of forming a coating film of the thermosetting resin composition on the polycarbonate resin sheet, any technique such as spray coating, flow coating, dipping, roller coating or bar coating may be employed. Spray coating, flow coating and dipping are preferred. The coating film may be formed on one side or both sides according to application.

(thermal curing step)

As thermal curing means, hot air drying or infrared drying is used to heat the coating film preferably at 90 to 140˚C for 10 to 90 minutes, more preferably at 110 to 130˚C for 30 to 75 minutes. When the heating temperature is lower than 90˚C, a crosslinking reaction is not promoted fully, whereby the obtained cured film may become unsatisfactory in terms of wear resistance and adhesion. When the heating temperature is higher than 140˚C, the deformation such as thermal warpage of the polycarbonate resin sheet may occur disadvantageously.

The thickness of the obtained cured film is preferably 1 to 10 $\mu$m, more preferably 2 to 8 $\mu$m. When the thickness of the cured film is smaller than 1 $\mu$m, satisfactory wear resistance is not obtained. When the thickness of the cured film is larger than 10 $\mu$m, the cured film is apt to be cracked at the time of molding disadvantageously. To further improve adhesion between the cured film and the polycarbonate resin sheet before the formation of the cured film, various pre-treatments can be made. As the pre-treatments, the surface of the polycarbonate resin sheet may be subjected to corona discharge or exposed to ultraviolet radiation, the polycarbonate resin sheet may be dried by heating at 90 to 120˚C for several minutes after a mixed solution of monoethanolamine and isobutanol is applied, or an acrylic layer may be formed as a primer layer.

<laminate>

The laminate of the present invention includes a polycarbonate resin sheet and a cured film formed on at least one side of the polycarbonate resin sheet, and the cured film is formed by thermally curing the above thermosetting resin composition. The laminate of the present invention has high weather resistance, wet heat resistance and wear resistance and excellent formability.

The weather resistance of the laminate of the present invention is evaluated by yellowness index ($\Delta$YI) and a value ($\Delta$Tt) obtained by subtracting the initial total light transmittance from the total light transmittance after an exposure test which is carried out by using a xenon weather resistance tester and a xenon arc light source at an irradiance of 60 W/m$^2$, a black panel temperature of 70$\pm$3˚C, a relative humidity of 50$\pm$5 % and an accumulated exposure dose of 306 MJ/m$^2$ when water is sprayed for 18 minutes during 120 minutes of a water spray cycle in accordance with JIS K 7350-2. The total light transmittance and the yellowness index were measured in accordance with JIS K 7105.

As for the weather resistance of the laminate of the present invention, $\Delta$Tt is preferably not more than 3 %, more preferably not more than 2 %, and $\Delta$YI is preferably not more than 5, more preferably not more than 4.

The wet heat resistance is evaluated by visually checking the surface of the cured film and the adhesion of the cured film after the laminate is left in a thermo-hygrostat at a temperature of 60˚C and a relative humidity of 95 % for 168 hours.

As for the adhesion of the cured film, after eleven cuts are made in the cured film at intervals of 1 mm in longitudinal and transverse directions with a cutter to obtain 100 squares, and Sellotape (registered trademark) (adhesive tape of Nichiban Co., Ltd.) is put on these squares and stripped off in a 90˚ direction at once, the number of squares which remain without the peel-off of the cured film is counted.

As for the wet heat resistance of the laminate of the present invention, a crack, whitening, an orange peel surface and peeling are not seen on the surface of the cured film by a visual check, and adhesion is preferably 100.

The wear resistance of the laminate is measured by using a Taber abrader and the CS-10F truck wheel at a load of 500 g/wheel and a revolving speed of 70 rpm in accordance with JIS K 6735. The wear resistance is evaluated by a value $\Delta$ haze value) obtained by subtracting the initial haze value from the haze value after 100 revolutions. The wear resistance of the laminate of the present invention is preferably not more than 10 %, more preferably not more than 7 %, particularly preferably not more than 5 %.

The extensibility of the cured film at 170˚C is preferably not less than 4.4 % which means that the cured film has excellent heat formability. When the upper limit of extensibility is not more than 10 %, a satisfactory effect is obtained.

Examples

The following examples are provided to further illustrate the present invention. "Parts" in the examples means "parts by weight" and the following evaluation methods were employed.

(1) Weather resistance of cured film

A sample cut to a thickness of 4.0 mm and a size of 68 x 68 mm was treated in a weather resistance tester comprising a xenon arc light source which was set to spray water for 18 minutes during 120 minutes of a water spray cycle at an irradiance of 60 $W/m^2$, a black panel temperature of 73˚C and a relative humidity of 50 % for 1,417 hours to check the appearance of the sample after the treatment and measure the difference of total light transmittance ΔTt (%) and the difference of yellowness index (ΔYI) before and after the treatment by the following methods.

Tt was measured by using an integrating sphere type light transmittance meter in accordance with JIS K 7105. YI was measured by using a color-difference meter in accordance with JIS K 7105.

(2) Wet heat resistance of cured film

After a sample cut to a thickness of 4.0 mm and a size of 68 x 68 mm was left in a thermo-hygrostat set at a temperature of 60˚C and a relative humidity of 95 % for 168 hours, a crack, whitening, an orange peel surface and peeling of the surface of the cured film were visually checked. Thereafter, the adhesion of the cured film was measured by the method described in (7).

(3) Extensibility of cured film

After two samples, each cut to a thickness of 4.0 mm and a size of 60 x 200 mm, were left in a hot air circulating drier set at 170˚C for 15 minutes, they were set on wooden frames having different curvatures in such a manner that the cured film was located on the exterior side, thermally bent along the wooden frames and gradually cooled to room temperature to visually check a crack and peeling of the surface of the cured film. When no crack or peeling was seen, it was judged that the cured film had an extensibility corresponding to that of the wooden frame having that curvature.

The curvatures (R) of the wooden frames were 50 mm and 240 mm. The extensibilities of the cured film when these wooden frames were used were 4.4 % and 1.0 % from the following equation (A).

The extensibility of the cured film is judged as ○ when the extensibility of the cured film is not less than 4.4 %, Δ when the extensibility is not less than 1.0 % and less than 4.4 % and × when the extensibility is less than 1.0 %.

$$\text{Extensibility}(\%) = \left( \frac{t}{2(1-r^2) \times (t+R)} \right) \times 100 \quad \cdots \text{(A)}$$

t: thickness of polycarbonate resin plate (mm)
r: Poisson's ratio
R: curvature of wooden frame (mm)

(4) Haze of cured film

This was measured by using an integrating sphere type haze meter in accordance with JIS K 6735.

(5) Wear resistance of cured film

This was measured by using a Taber abrader in accordance with JIS K 6735. This was measured by using the CS-10F truck wheel at a load of 500 g/wheel and a revolving speed of 70 rpm. The measurement value was a value obtained by subtracting the initial haze value from the haze value after 100 revolutions.

(6) Thickness of cured film

The thickness of the cured film was measured at a coating film refractive index of 1.55 by using the MCPD-1000 optical interference type film thickness meter of Otsuka Electronics Co., Ltd.

(7) Adhesion of cured film

Eleven cuts were made in the cured film at intervals of 1 mm in longitudinal and transverse directions with a cutter to obtain 100 squares, and Sellotape (registered trademark) (adhesive tape of Nichiban Co., Ltd.) was put on these squares and stripped off in a 90˚ direction at once. The number of squares which remained without the peel-off of the cured film was counted.

(synthesis of acrylic copolymer (B))

[Reference Example 1]

79.9 parts (0.7 mole) of ethyl methacrylate (to be abbreviated as EMA hereinafter), 33.6 parts (0.2 mole) of cyclohexyl methacrylate (to be abbreviated as CHMA hereinafter), 13.0 parts (0.1 mole) of 2-hydroxyethyl methacrylate (to be abbreviated as HEMA hereinafter), 126.6 parts of methylisobuthylketone (to be abbreviated as MIBK hereinafter) and 63.3 parts of 2-butanol (to be abbreviated as 2-BuOH hereinafter) were added to a flask equipped with a reflux condenser and a stirrer whose inside had been substituted by nitrogen to be mixed together. A nitrogen gas was let pass through the mixture for 15 minutes to remove oxygen, the temperature was raised to 70˚C in a nitrogen gas stream, and 0.33 part of azobisisobutyronitrile (to be abbreviated as AIBN hereinafter) was added to the mixture to carry out a reaction in a nitrogen gas stream under agitation at 70˚C for 5 hours. 0.08 part of AIBN was added, and the temperature was raised to 80˚C to further carry out the reaction for 3 hours so as to obtain an acrylic copolymer solution (B-i) having a nonvolatile content of 39.6 %. The weight average molecular weight of the acrylic copolymer was 125,000 in terms of polystyrene by GPS measurement (column; Shodex GPCA-804, eluant; THF).

[Reference Example 2]

102.7 parts (0.9 mole) of EMA, 13.0 parts (0.1 mole) of HEMA, 115.7 parts of MIBK and 57.9 parts of 2-BuOH were added to a flask equipped with a reflux condenser and a stirrer whose inside had been substituted by nitrogen to be mixed together. A nitrogen gas was let pass through the mixture for 15 minutes to remove oxygen, the temperature was raised to 70˚C in a nitrogen gas stream, and 0.33 part of AIBN was added to the mixture to carry out a reaction in a nitrogen gas stream under agitation at 70˚C for 5 hours. 0.08 part of AIBN was added, and the temperature was raised to 80˚C to further carry out the reaction for 3 hours so as to obtain an acrylic copolymer solution (B-ii) having a nonvolatile content of 39.6 %. The weight average molecular weight of the acrylic copolymer was 130,000 in terms of polystyrene by GPS measurement (column; Shodex GPCA-804, eluant; THF).

Example 1

(i) preparation of methylated methylolmelamine coating composition

100 parts of methylated methylolmelamine [Simel 301 of Nihon Cytec Industries Inc. (self-crosslinking degree of 1.4)], 6 parts of a triazine-based ultraviolet absorbent [TINUVIN-400 of Ciba Specialty Chemicals Holding Inc.], 5 parts of nitric acid (concentration of 60 wt%), 60 parts of 1,6-hexanediol, 300 parts of isopropyl alcohol, 554 parts of isobutyl alcohol and 47 parts of ethylene glycol monobutyl ether were mixed together, and 62.5 parts of the above acrylic copolymer solution (B-i) was further added to the resulting solution to obtain a methylated methylolmelamine coating composition.

(ii) manufacture of laminate

After the methylated methylolmelamine coating composition obtained in (i) was applied to the surface of a polycarbonate resin sheet having a thickness of 4.0 mm, a width of 200 mm and a length of 300 mm and a viscosity average molecular weight of 23, 900 [Panlite Sheet PC-1111 of Teijin Chemicals Ltd.] by flow coating and left at room temperature for 10 minutes, the coating film was dried by heating at 120˚C for 60 minutes with a hot air circulating drier to obtain a laminate having a cured film with a thickness shown in Table 1.

The weather resistance, wet heat resistance, extensibility, haze, wear resistance and adhesion of the cured film of the obtained laminate were evaluated, and the results are shown in Table 1.

Examples 2 to 5 and Comparative Examples 1 to 6

Methylated methylolmelamine coating compositions were prepared in the same manner as in Example 1 (i) except that an ultraviolet absorbent and a curing catalyst shown in Table 1 were used in amounts shown in Table 1 and applied to the polycarbonate resin sheet in the same manner as in Example 1 (ii) to obtain laminates having a cured film with a thickness shown in Table 1.

Example 6

A methylated methylolmelamine coating composition was prepared in the same manner as in Example 1 (i) except that 100 parts of [the Simel 303 (self-crosslinking degree of 1.7) of Nihon Cytec Industries Inc.] was used as the methylated methylolmelamine and applied to the polycarbonate resin sheet in the same manner as in Example 1 (ii) to obtain a laminate having a cured film with a thickness shown in Table 1.

Example 7

A methylated methylolmelamine coating composition was prepared in the same manner as in Example 1 (i) except that 30 parts by weight of the acrylic copolymer solution (B-ii) was used and applied to the polycarbonate resin sheet in the same manner as in Example 1 (ii) to obtain a laminate having a cured film with a thickness shown in Table 1.

Example 8

A methylated methylolmelamine coating composition was prepared in the same manner as in Example 1 (i) except that 10 parts of a triazine-based ultraviolet absorbent [TINUVIN-405 of Ciba Specialty Chemicals Holding Inc.] was used as the ultraviolet absorbent and applied to the polycarbonate resin sheet in the same manner as in Example 1 (ii) to obtain a laminate having a cured film with a thickness shown in Table 1.

The weather resistance, wet heat resistance, extensibility, haze, wear resistance, film thickness and adhesion of each of the cured films of the obtained laminates were evaluated, and the results are shown in Table 1.

Table 1

| | Composition | | | |
|---|---|---|---|---|
| | Ultraviolet absorbent | Amount (parts) | Curing catalyst | Amount (parts) |
| Example 1 | TINUVIN-400 | 6 | Nitric acid | 5 |
| Example 2 | TINUVIN-400 | 4 | Nitric acid | 5 |
| Example 3 | TINUVIN-400 | 18 | Nitric acid | 5 |
| Example 4 | TINUVIN-400 | 12 | Nitric acid | 2 |
| Example 5 | TINUVIN-400 | 12 | Nitric acid | 9 |
| Example 6 | TINUVIN-400 | 6 | Nitric acid | 5 |
| Example 7 | TINUVIN-400 | 6 | Nitric acid | 5 |
| Example 8 | TINUVIN-405 | 10 | Nitric acid | 5 |
| Comparative Example 1 | TINUVIN-400 | 20 | Nitric acid | 5 |
| Comparative Example 2 | TINUVIN-400 | 3 | Nitric acid | 5 |
| Comparative Example 3 | TINUVIN-400 | 6 | Nitric acid | 10 |
| Comparative Example 4 | TINUVIN-400 | 6 | Maleic acid | 5 |
| Comparative Example 5 | Viosorb-130 | 6 | Nitric acid | 5 |
| Comparative Example 6 | Viosorb-130 | 6 | Maleic acid | 5 |

Viosorb-130; benzophenone-based ultraviolet absorbent (of Kyodo Chemical Co., Ltd.)

Table 1 (continued)

| | Evaluation of performance | | | | | | | | | | |
|---|---|---|---|---|---|---|---|---|---|---|---|
| | Weather resistance | | | Wet heat resistance | | | | | | | |
| | Appearance | ΔTt | ΔYI | Appearance | Adhesion (Number of remaining squares) | Extensibility | Haze | Wear resistance Δhaze | Film thickness (μm) | Adhesion (number of remaining squares) |
| Ex.1 | Satisfactory | 1.0 | 4.5 | Satisfactory | 100 | ○ | 0.2 | 5.4 | 4-5 | 100 |
| Ex.2 | Satisfactory | 1.2 | 4.7 | Satisfactory | 100 | ○ | 0.2 | 5.5 | 4-5 | 100 |
| Ex.3 | Satisfactory | 1.1 | 3.0 | Satisfactory | 100 | ○ | 0.2 | 6.8 | 4-5 | 100 |
| Ex.4 | Satisfactory | 1.0 | 3.3 | Satisfactory | 100 | ○ | 0.2 | 9.5 | 4-5 | 100 |
| Ex.5 | Satisfactory | 1.2 | 3.3 | Satisfactory | 100 | ○ | 0.2 | 6.4 | 4-5 | 100 |
| Ex.6 | Satisfactory | 1.2 | 4.6 | Satisfactory | 100 | ○ | 0.2 | 8.8 | 4-5 | 100 |
| Ex.7 | Satisfactory | 2.0 | 4.5 | Satisfactory | 100 | ○ | 0.2 | 5.2 | 4-5 | 100 |
| Ex.8 | Satisfactory | 1.6 | 4.2 | Satisfactory | 100 | ○ | 0.2 | 6.0 | 4-5 | 100 |
| C.Ex. 1 | Whitening | 0.9 | 2.9 | Satisfactory | 100 | ○ | 0.2 | 5.7 | 4-5 | 100 |
| C.Ex. 2 | Satisfactory | 2.5 | 5.1 | Satisfactory | 100 | ○ | 0.2 | 6.0 | 4-5 | 100 |
| C.Ex. 3 | Satisfactory | 1.5 | 3.3 | Satisfactory | 100 | △ | 0.2 | 7.5 | 4-5 | 100 |
| C.Ex. 4 | Satisfactory | 1.8 | 3.7 | Orange peel surface | 100 | ○ | 0.2 | 6.5 | 4-5 | 100 |
| C.Ex. 5 | Satisfactory | 3.3 | 9.2 | Satisfactory | 100 | △ | 0.1 | 9.0 | 4-5 | 100 |
| C.Ex. 6 | Satisfactory | 4.4 | 13.5 | Orange peel surface | 100 | △ | 0.2 | 6.6 | 4-5 | 100 |

Ex.: Example C.Ex.: Comparative Example

Effect of the Invention

The thermosetting resin composition of the present invention provides a cured film having excellent transparency, wear resistance, weather resistance, wet heat resistance and formability. Since the thermosetting resin composition of the present invention also has excellent adhesion to a polycarbonate resin sheet, it is useful as a film for the polycarbonate resin sheet. The laminate of the present invention has transparency, wear resistance, weather resistance and wet heat resistance and excellent formability. According to the process of manufacturing the laminate of the present invention, a laminate having excellent transparency, wear resistance, weather resistance, wet heat resistance and formability can be manufactured.

Industrial Applicability

The laminate of the present invention is particularly useful for helmet shields, wind-proof application in two-wheel vehicles such as motorcycles and scooters and windows for construction vehicles all of which require 3-D formability and performance high enough to withstand outdoor use.

## Claims

**1.** A thermosetting resin composition comprising:

100 parts by weight of methylated methylolmelamine (A);
1 to 100 parts by weight of an acrylic copolymer (B) which contains:

(i) 50 to 99 mol% of a recurring unit represented by the following formula (1) (unit B-1):

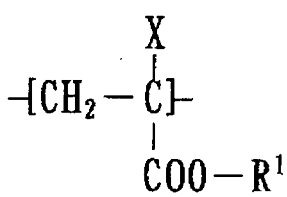

(1)

(X is a hydrogen atom or methyl group, and $R^1$ is an alkyl group having 1 to 5 carbon atoms),
(ii) 0 to 35 mol% of a recurring unit represented by the following formula (2) (unit B-2):

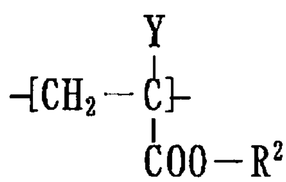

(2)

(Y is a hydrogen atom or methyl group, and $R^2$ is a cycloalkyl group having 6 to 20 carbon atoms), and
(iii) 1 to 35 mol% of a recurring unit represented by the following formula (3) (unit B-3):

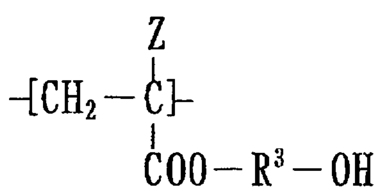

(3)

(Z is a hydrogen atom or methyl group, and $R^3$ is an alkylene group having 2 to 5 carbon atoms),

the total content of the units (B-1) to (B-3) being at least 70 mol% based on 100 mol% of the total of all the recurring units,
4 to 28 parts by weight of a triazine-based ultraviolet absorbent (C);
2 to 9 parts by weight of nitric acid (D);
10 to 200 parts by weight of a crosslinking agent (E); and
200 to 42,000 parts by weight of a solvent (F).

**2.** The resin composition according to claim 1, wherein the acrylic copolymer (B) contains 50 to 99 mol% of ethyl methacrylate (unit B-1), 0 to 35 mol% of cyclohexyl methacrylate (unit B-2) and 1 to 35 mol% of 2-hydroxyethyl methacrylate (unit B-3).

**3.** The resin composition according to claim 1, wherein the triazine-based ultraviolet absorbent (C) is represented by the following formula (4):

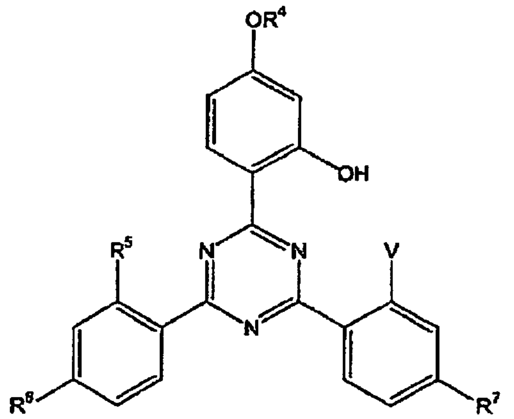

(4)

wherein $R^4$ is an alkyl group having 1 to 18 carbon atoms, substituent represented by $-CH_2CH(OH) CH_2O-R^8$ or substituent represented by $-CH(CH_3)C(O)O-R^9$ ($R^8$ is an alkyl group having 1 to 18 carbon atoms, and $R^9$ is an alkyl group having 1 to 18 carbon atoms), $R^5$ is a hydrogen atom, alkyl group having 1 to 18 carbon atoms or alkoxy group having 1 to 18 carbon atoms, $R^6$ and $R^7$ are each independently a hydrogen atom, alkyl group having 1 to 18 carbon atoms, alkoxy group having 1 to 18 carbon atoms or phenyl group which may be substituted by an alkyl group having 1 to 18 carbon atoms or halogen atom, and V is a hydrogen atom, OH group or alkyl group having 1 to 12 carbon atoms.

**4.** The resin composition according to claim 1, wherein the crosslinking agent (E) is at least one selected from the group consisting of ethylene glycol, diethylene glycol, butanediol, hexanediol, octanediol, decanediol, triethylene glycol, polyethylene glycol and cyclohexane dimethanol.

**5.** The resin composition according to claim 1, wherein the solvent (F) is at least one selected from the group consisting of an alkyl alcohol having 1 to 5 carbon atoms, cellosolve and aromatic hydrocarbon.

**6.** A laminate comprising a polycarbonate resin sheet and a cured film formed on at least one side of the sheet, wherein the cured film is obtained by thermally curing the thermosetting resin composition of claim 1.

**7.** The laminate according to claim 6 which has a Δ yellowness index (ΔYI) of not more than 5 and a Δ total light transmittance value (ΔTt) of not more than 3 % before and after an exposure test which is carried out by using a xenon ark light source at an irradiance of 60 $W/m^2$, a black panel temperature of 70±3°C, a relative humidity of 50+5 % and an accumulated exposure dose of 306 $MJ/m^2$ when water is sprayed for 18 minutes during 120 minutes of a water spray cycle.

**8.** The laminate according to claim 6, wherein when eleven cuts are made in the cured film at intervals of 1 mm in longitudinal and transverse directions with a cutter to obtain 100 squares and Sellotape (registered trademark) (adhesive tape of Nichiban Co., Ltd.) is put on these squares and stripped off in a 90° direction at once after the

laminate is left in a thermo-hygrostat at a temperature of 60°C and a relative humidity of 95 % for 168 hours, the number of squares which remain without the peel-off of the cured film is 100.

**9.** The laminate according to claim 6, wherein the extensibility of the cured film is not less than 4.4 %.

**10.** The laminate according to claim 6, wherein the thickness of the cured film is 1 to 10 μm.

**11.** The laminate according to claim 6, wherein the difference (Δ haze value) between the haze value after 100 revolutions and the initial haze value measured by using a Taber abrader and the CS-10F truck wheel at a load of 500 g/wheel and a revolving speed of 70 rpm is not more than 10 %.

**12.** The laminate according to claim 6, wherein the thickness of the polycarbonate resin sheet is 0.4 to 8.0 mm.

**13.** A process of manufacturing a laminate, comprising the steps of:

(i) forming a coating film by applying the thermosetting resin composition of claim 1 to a polycarbonate resin sheet; and
(ii) forming a cured film by thermally curing the coating film.

**Patentansprüche**

**1.** Wärmehärtende Harzzusammensetzung, umfassend:

100 Gewichtsteile methyliertes Methylolmelamin (A);
1 bis 100 Gewichtsteile eines Acrylcopolymers (B), welches enthält:

(i) 50 bis 99 Mol% einer Wiederholungseinheit, dargestellt durch die folgende Formel (1) (Einheit B-1):

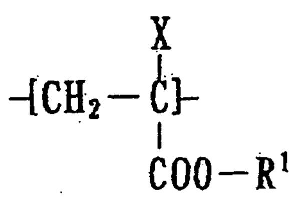

(1)

(X ist ein Wasserstoffatom oder eine Methylgruppe und $R^1$ ist eine Alkylgruppe mit 1 bis 5 Kohlenstoffatomen),
(ii) 0 bis 35 Mol% einer Wiederholungseinheit, dargestellt durch die folgende Formel (2) (Einheit B-2):

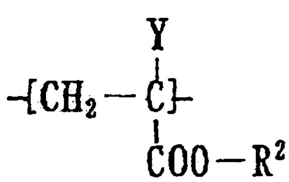

(2)

(Y ist ein Wasserstoffatom oder eine Methylgruppe und $R^2$ ist eine Cycloalkylgruppe mit 6 bis 20 Kohlenstoffatomen), und
(iii) 1 bis 35 Mol% einer Wiederholungseinheit, dargestellt durch die folgende Formel (3) (Einheit B-3):

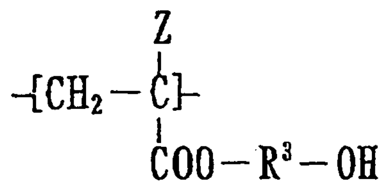

(3)

(Z ist ein Wasserstoffatom oder eine Methylgruppe und $R^3$ ist eine Alkylengruppe mit 2 bis 5 Kohlenstoffatomen),

wobei der Gesamtgehalt der Einheiten (B-1) bis (B-3) mindestens 70 Mol% beträgt, bezogen auf 100 Mol% der Gesamtheit aller Wiederholungseinheiten,
4 bis 28 Gewichtsteile eines Triazin-basierten Ultraviolettabsorbers (C);
2 bis 9 Gewichtsteile Salpetersäure (D);
10 bis 200 Gewichtsteile eines Vernetzungsmittels (E); und
200 bis 42.000 Gewichtsteile eines Lösungsmittels (F).

**2.** Harzzusammensetzung gemäß Anspruch 1, wobei das Acrylcopolymer (B) 50 bis 99 Mol% Ethylmethacrylat (Einheit B-1), 0 bis 35 Mol% Cyclohexylmethacrylat (Einheit B-2) und 1 bis 35 Mol% 2-Hydroxyethylmethacrylat (Einheit B-3) enthält.

**3.** Harzzusammensetzung gemäß Anspruch 1, wobei der Triazinbasierte Ultraviolettabsorber (C) dargestellt wird durch die folgende Formel (4):

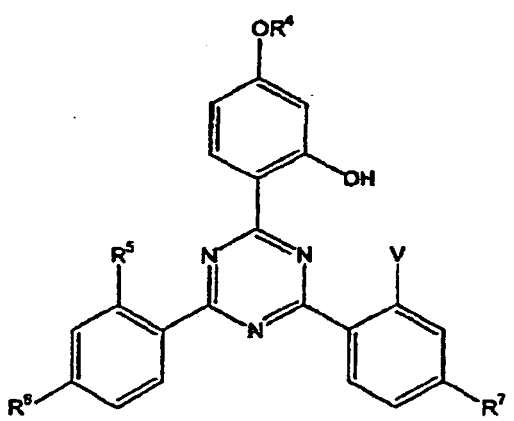

(4)

wobei $R^9$ eine Alkylgruppe mit 1 bis 18 Kohlenstoffatomen ist, der Substituent dargestellt wird durch $-CH_2CH(OH)CH_2O-R^8$ oder der Substituent dargestellt wird durch $-CH(CH3)C(O)O-R^9$ ($R^8$ ist eine Alkylgruppe mit 1 bis 18 Kohlenstoffatomen und $R^9$ ist eine Alkylgruppe mit 1 bis 18 Kohlenstoffatomen), $R^5$ ist ein Wasserstoffatom, eine Alkylgruppe mit 1 bis 18 Kohlenstoffatomen oder eine Alkoxygruppe mit 1 bis 18 Kohlenstoffatomen, $R^6$ und $R^7$ sind jeweils unabhängig ein Wasserstoffatom, eine Alkylgruppe mit 1 bis 18 Kohlenstoffatomen, eine Alkoxygruppe mit 1 bis 18 Kohlenstoffatomen oder eine Phenylgruppe, die substituiert sein kann mit einer Alkylgruppe mit 1 bis 18 Kohlenstoffatomen oder einem Halogenatom, und V ist ein Wasserstoffatom, eine OH-Gruppe oder eine Alkylgruppe mit 1 bis 12 Kohlenstoffatomen.

**4.** Harzzusammensetzung gemäß Anspruch 1, wobei das Vernetzungsmittel (E) mindestens eines ist, ausgewählt aus der Gruppe, bestehend aus Ethylenglykol, Diethylenglykol, Butandiol, Hexandiol, Octandiol, Decandiol, Triethylenglykol, Polyethylenglykol und Cyclohexandimethanol.

**5.** Harzzusammensetzung gemäß Anspruch 1, wobei das Lösungsmittel (F) mindestens eines ist, ausgewählt aus der

Gruppe, bestehend aus einem Alkylalkohol mit 1 bis 5 Kohlenstoffatomen, Cellosolve und aromatischem Kohlenwasserstoff.

**6.** Laminat, umfassend eine Polycarbonatharzfolie und einen gehärteten Film, gebildet auf mindestens einer Seite der Folie, wobei der gehärtete Film erhalten wird durch thermisches Härten der wärmehärtenden Harzzusammensetzung gemäß Anspruch 1.

**7.** Laminat gemäß Anspruch 6, welches einen Δ-Gelbwertindex (ΔYI) von nicht mehr als 5 und einen Δ-Gesamtlichttransmissionswert (ΔTt) von nicht mehr als 3% vor und nach einem Expositionstest aufweist, der ausgeführt wird durch Verwendung einer Xenongasentladungslampe bei einer Bestrahlung von 60 $W/m^2$, einer Schwarz-Standard-Temperatur von 70±3°C, einer relativen Feuchte von 50+5% und einer akkumulierten Expositionsdosis von 306 $MJ/m^2$, wenn Wasser 18 Minuten über 120 Minuten eines Wassersprühzyklus aufgesprüht wird.

**8.** Laminat gemäß Anspruch 6, wobei elf Schnitte im gehärteten Film in Abständen von 1 mm in Längs- und Querrichtung mit einem Schneidegerät unter Erhalt von 100 Quadraten angebracht werden und Cellotape (eingetragenes Warenzeichen) (Klebeband von Nichiban Co., Ltd.) auf diese Quadrate gegeben wird und in 90°-Richtung auf einmal abgezogen wird, nachdem das Laminat in einem Thermohygrostaten bei einer Temperatur von 60°C und einer relativen Feuchte von 95% für 168 Stunden belassen wurde, die Anzahl an verbleibenden Quadraten ohne Abschälung des gehärteten Films 100 beträgt.

**9.** Laminat gemäß Anspruch 6, wobei die Dehnbarkeit des gehärteten Films nicht geringer ist als 4,4%.

**10.** Laminat gemäß Anspruch 6, wobei die Dicke des gehärteten Films 1 bis 10 μm beträgt.

**11.** Laminat gemäß Anspruch 6, wobei der Unterschied (Δ-Trübungswert) zwischen dem Trübungswert nach 100 Umdrehungen und dem anfänglichen Trübungswert, gemessen durch Verwendung eines Taber-Abreibers und des CS-10F-Rads bei einer Last von 500 g/Rad und einer Umdrehungsgeschwindigkeit von 70 U/min nicht größer ist als 10%.

**12.** Laminat gemäß Anspruch 6, wobei die Dicke der Polycarbonatharzfolie 0,4 bis 8,0 mm beträgt.

**13.** Verfahren zur Herstellung eines Laminats, umfassend die Schritte:

(i) Bildung eines Überzugsfilms durch Auftragen der wärmehärtenden Harzzusammensetzung gemäß Anspruch 1 auf eine Polycarbonatharzfolie und
(ii) Bildung eines gehärteten Films durch thermisches Härten des Überzugsfilms.

## Revendications

**1.** Composition de résine thermodurcissable comprenant :

100 parties en poids d'une méthylolmélamine méthylée (A) ;
1 à 100 parties en poids d'un copolymère acrylique (B) qui contient :

(i) 50 à 99 % en moles d'un motif récurrent représenté par la formule (1) suivante (motif B-1)

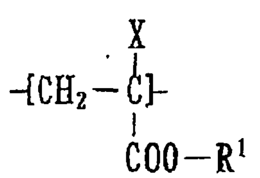

(1)

(X est un atome d'hydrogène ou un groupe méthyle, et $R^1$ est un groupe alkyle comportant 1 à 5 atomes de carbone),

(ii) 0 à 35 % en moles d'un motif récurrent représenté par la formule (2) suivante (motif B-2)

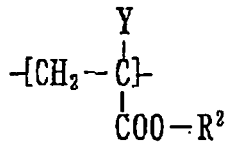

(2)

(Y est un atome d'hydrogène ou un groupe méthyle, et $R^2$ est un groupe cycloalkyle comportant 6 à 20 atomes de carbone), et

(iii) 1 à 35 % en moles d'un motif récurrent représenté par la formule (3) suivante (motif B-3)

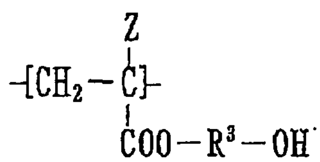

(3)

(Z est un atome d'hydrogène ou un groupe méthyle, et $R^3$ est un groupe alkylène comportant 2 à 5 atomes de carbone),

la teneur totale en motifs (B-1) à (B-3) étant d'au moins 70 % en moles, pour 100 % en moles du total de tous les motifs récurrents,
4 à 28 parties en poids d'un absorbeur d'ultraviolets à base d'une triazine (C) ;
2 à 9 parties en poids d'acide nitrique (D) ;
10 à 200 parties en poids d'un agent de réticulation (E) ; et
200 à 42 000 parties en poids d'un solvant (F).

**2.** Composition de résine selon la revendication 1, dans laquelle le copolymère acrylique (B) contient 50 à 99 % en moles de méthacrylate d'éthyle (motif B-1), 0 à 35 % en moles de méthacrylate de cyclohexyle (motif (B-2) et 1 à 35 % en moles de méthacrylate de 2-hydroxyéthyle (motif (B-3).

**3.** Composition de résine selon la revendication 1, dans laquelle l'absorbeur d'ultraviolets à base d'une triazine (C) est représenté par la formule (4) suivante :

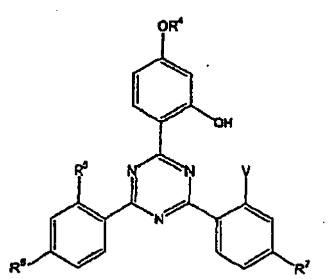

(4)

dans laquelle $R^4$ est un groupe alkyle comportant 1 à 18 atomes de carbone, un substituant représenté par $-CH_2CH(OH)CH_2O-R^8$ ou un substituant représenté par $-CH(CH_3)C(O)O-R^9$ ($R^8$ est un groupe alkyle comportant 1 à 18 atomes de carbone et $R^9$ est un groupe alkyle comportant 1 à 18 atomes de carbone), $R^5$ est un atome d'hydrogène, un groupe alkyle comportant 1 à 18 atomes de carbone ou un groupe alcoxy comportant 1 à 18 atomes de carbone,

$R^6$ et $R^7$ sont chacun indépendamment un atome d'hydrogène, un groupe alkyle comportant 1 à 18 atomes de carbone, un groupe alcoxy comportant 1 à 18 atomes de carbone ou un groupe phényle qui peut être substitué par un groupe alkyle comportant 1 à 18 atomes de carbone ou par un atome d'halogène, et V est un atome d'hydrogène, un groupe OH ou un groupe alkyle comportant 1 à 12 atomes de carbone.

**4.** Composition de résine selon la revendication 1, dans laquelle l'agent de réticulation (E) est au moins un composé choisi dans le groupe constitué par l'éthylène glycol, le diéthylène glycol, le butanediol, l'hexanediol, l'octanediol, le décanediol, le triéthylène glycol, le polyéthylène glycol et le cyclohexanediméthanol.

**5.** Composition de résine selon la revendication 1, dans laquelle le solvant (F) est au moins un composé choisi dans le groupe constitué par un alcool alkylique comportant 1 à 5 atomes de carbone, la cellosolve et un hydrocarbure aromatique.

**6.** Stratifié comprenant une feuille de résine de polycarbonate et un film durci formé sur au moins une face de la feuille, dans lequel le film durci est obtenu par durcissement thermique de la composition de résine thermodurcissable selon la revendication 1.

**7.** Stratifié selon la revendication 6, qui a un $\Delta$ de l'indice de jaunissement ($\Delta$YI) d'au plus 5 et un $\Delta$ de la valeur de transmittance de la lumière totale ($\Delta$Tt) d'au plus 3 % avant et après un test d'exposition qui est réalisé à l'aide d'une source de lumière à arc de xénon à un rayonnement de 60 $W/m^2$, une température de panneau noir de $70\pm3^\circ C$, une humidité relative de 50+5 % et une dose d'exposition cumulée de 306 $MJ/m^2$ lorsque de l'eau est pulvérisée pendant 18 minutes pendant 120 minutes d'un cycle de pulvérisation d'eau.

**8.** Stratifié selon la revendication 6, dans lequel, lorsqu'onze découpes sont réalisées dans le film durci à des intervalles de 1 mm dans les sens longitudinaux et transversaux avec un cutter pour obtenir 100 carrés et lorsque du Sellotape (marque déposée) (ruban adhésif de Nichiban Co., Ltd.) est placé sur ces carrés et est décollé dans une direction de 90° d'un coup après que le stratifié a été laissé dans dispositif thermo-hygrostaté à une température de 60°C et sous une humidité relative de 95 % pendant 168 heures, le nombre de carrés qui reste sans être décollé du film durci est de 100.

**9.** Stratifié selon la revendication 6, dans lequel la capacité d'extension du film durci est d'au moins 4,4 %.

**10.** Stratifié selon la revendication 6, dans lequel l'épaisseur du film durci est de 1 à 10 $\mu$m.

**11.** Stratifié selon la revendication 6, dans lequel la différence ($\Delta$ de la valeur de voile) entre la valeur de voile après 100 tours et la valeur de voile initiale, mesurée à l'aide d'un dispositif d'abrasion Taber et d'une roue de camion CS-10F sous une charge de 500 g/roue et à une vitesse de rotation de 70 tours par minute, est d'au plus 10 %.

**12.** Stratifié selon la revendication 6, dans lequel l'épaisseur de la feuille de résine de polycarbonate est de 0,4 à 8,0 mm.

**13.** Procédé de fabrication d'un stratifié, comprenant les étapes de :

(i) formation d'un film de revêtement par application de la composition de résine thermodurcissable selon la revendication 1 sur une feuille de résine de polycarbonate ; et
(ii) formation d'un film durci par durcissement thermique du film de revêtement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10036540 A
- JP 11343460 A
- JP 2007112862 A